# EUROPÄISCHE PATENTANMELDUNG

(11) **EP 1 493 595 A2**
(43) Veröffentlichungstag der Anmeldung: **05.01.2005**
(21) Anmeldenummer: 04015427.0
(22) Anmeldetag: 30.06.2004
(51) Int. Cl.: B44C 1/22, B44F 7/00

(54) **Verfahren und Vorrichtung zum Erzeugen eines dreidimensional wirkenden Bildes auf einem dünnen Substrat**

(30) Priorität: 30.06.2003 DE 10329381
(71) Anmelder: Kuehne, Marco, 20357 Hamburg (DE)
(72) Erfinder: Kuehne, Marco, 20357 Hamburg (DE)
(74) Vertreter: Alber, Norbert, Dipl.-Ing.

(57) **Zusammenfassung**

Mittels Laser können auf einem Papier (1) dreidimensionale Bildwirkungen erzielt werden, durch insbesondere reliefartige (h), z. B. schichtweisen Materialabtrag, und/oder Rasterung, ggf. ergänzt um Farbveränderung an der Oberfläche (2a) und Strukturveränderung, ebenfalls bewirkt mittels Laser (4).

## Beschreibung

### I. Anwendungsgebiet

Die Erfindung betrifft das Gebiet der Laserbearbeitung.

### II. Technischer Hintergrund

Es ist bekannt, durch Bestrahlen mit Laserlicht die Oberfläche unterschiedlicher Materialien zu behandeln. Beispielsweise ist es bekannt, alle, auch harte Werkstoffe, mittels Laser zu gravieren oder völlig zu durchtrennen, wobei die Leistung des Lasers entsprechend dem Material und der gewünschten Gravurtiefe geregelt wird.

Dabei wird im behandelten Material, dem Substrat, die Energie des Laserlichtes absorbiert und in Wärme umgewandelt, wodurch ein Verbrennen bzw. Verdampfen des Substrates bewirkt wird.

Dementsprechend ist es auch bereits bekannt, dünne Substrate, z. B. aus Kunststoff, nämlich in Form von Ausweiskarten, Kreditkarten, Telefonkarten oder ähnlichem, mittels Laser zu beschriften oder mit einem Bild auszustatten, indem durch das Bestrahlen mit Laser die Oberfläche des hellen Kunststoffes aufgrund einer Verkohlung beim Verbrennen geschwärzt zurückbleibt.

Bisher stellten jedoch vor allem organische bzw. brennbare Substrate wie Papier, Holz, Leder ein Problem bei der Laserbehandlung dar, vor allem dann, wenn diese Substrate In sehr dünner Form wie etwa Papier vorlagen.

Bel Bearbeitung mittels Laserlicht war eine Schwärzung der Oberfläche aufgrund des Verkohlens des brennbaren Bestandteiles nicht vermeidbar, oder nur unter großen technischen Zugeständnissen, wie etwa Bearbeiten mit einem nicht fokussierten Laser und Herstellung eines Bildes auf der Oberfläche mittels Schablone bzw. Maske, nicht jedoch mittels eines gesteuerten, fokussierten Laserstrahls.

So beschreibt das Europäische Patent 0384582 eine Vorrichtung zur Laserbearbeitung von Papier, bei der ein nicht fokussierter, paralleler Laserstrahl, der einen bestimmten Ausbreitungsmodus besitzt, verwendet wird und die thermische Energie im Auftreffpunkt eine Funktion des Integrals des Profils der Strahlungsintensität des Strahles sein muss, welches an dem Punkt wirkt, wenn der Strahl den Punkt überquert. Ein nennenswerter, sichtbarer Materialabtrag findet dabei jedoch nicht statt, sondern es wird lediglich eine leichte Farbveränderung auf der Oberfläche nach Art eines Wasserzeichens erzeugt.

### III. Darstellung der Erfindung

### a) Technische Aufgabe

Es ist daher die Aufgabe gemäß der Erfindung, ein Verfahren zum Erzeugen eines dreidimensional wirkenden Bildes mittels eines tatsächlichen Materialabtrages von der Oberfläche des Substrates zur Verfügung zu stellen, sowie ein so behandeltes Substrat und dessen Verwendungsmöglichkeit.

### b) Lösung der Aufgabe

Diese Aufgabe wird durch die Merkmale der Ansprüche 1, 6, 7 und 12 - 14 gelöst. Vorteilhafte Ausführungsformen ergeben sich aus den Unteransprüchen.

Die dreidimensionale Bildwirkung kann prinzipiell erzielt werden durch Materialabtrag von der Oberfläche des Substrates, Veränderung der Struktur der Oberfläche, wie etwa mittels Aufrauhen, oder Beeinflussung der Farbe der Oberfläche, wobei diese Methoden auch kombiniert angewandt werden können, und jede davon insbesondere mittels Laserlichtbehandlung bewirkt werden kann.

Dabei können die einzelnen Methoden bei gekoppelter Anwendung durchaus unabhängig voneinander gesteuert und damit auch in ihrer Wirkung gesteuert werden.

Beim Materialabtrag soll das Material des Substrates natürlich nicht vollständig entfernt, also das Substrat nicht durchbohrt oder durchstoßen werden, sondern nur ein teilweiser Materialabtrag erfolgen, so dass die gewünschte dreidimensionale Wirkung auftritt.

Im folgenden wird - für die Zwecke der gesamten Anmeldung - anstelle des allgemeinen Begriffes "Substrat" der konkrete beispielhafte Ausdruck "Papier" im Sinne eines Blattes Papier verwendet, ohne die Erfindung hierdurch auf konkrete Materialien wie Papier, Pappe, Karton, Holz, Furnier, Leder, Filz oder Textil zu beschränken.

Die dreidimensionale Wirkung kann durch negative reliefartige Abbildung des gewünschten Gegenstandes im Substrat, also in Form einer flachen konkaven Aushöhlung, erreicht werden oder durch eine Positivdarstellung, also ein konvex erhaben aus einem darum herum abgesenkten Oberflächenbereich des Papiers hervorstehendes flaches Abbild.

Der Materialabtrag kann dabei nur in eine einzige definierte Tiefe erfolgen, so dass sich kein Höhenprofil mit mehreren Höhenlagen ausbildet, sondern nur zwei Höhenlagen, nämlich ursprüngliche Oberfläche und tieferliegende, bearbeitete Oberfläche, existieren, also eine Art Gravur, oder es kann durch vor allem schichtweisen Abtrag ein tatsächliches, meist stufenförmiges, Höhenprofil erzielt werden. Dies ist natürlich abhängig von der Dicke des Papiers, aber bereits bei Papierdicken ab wenigen 10-tel mm, insbesondere 0,5 mm Dicke, ist nicht nur ein einschichtiger Materialabtrag nach Art einer Gravur sondern bereits auch ein schichtweiser Abtrag möglich, deren Schichtanzahl mit zunehmender Dicke des Papiers vergrößert werden kann.

Beim Aufrauhen wird - vor allem bei inhomogen Materialien wie etwa der faserförmigen Struktur von Papier, mittels Laser die nahe der Oberfläche liegenden freien Enden der einzelnen Fasern separiert, beispielsweise durch Lösen oder Entfernen des Bindemittels zwischen den Fasern, oder durch Erwärmung und Ausdehnung der nahe der Oberfläche liegenden Faserenden und dadurch deren Ablösung aus dem Verbund.

Die optische Wirkung durch Materialabtrag kann weiterhin bewirkt werden durch ein Rastern der Oberfläche des Papiers mittels Lasereinschlägen, indem die kleinflächigen bzw. punktförmigen Einschläge hinsichtlich ihres gegenseitigen Abstandes sowie ihrer Größe und/oder Tiefe gesteuert werden, wodurch in der Fläche die gewünschte Bildwirkung erzielt werden kann. Im Extremfall können die Einschüsse sich gegenseitig berühren und auch ineinander übergehen, wodurch ein dann flächiger durchgehender Abtrag erzielt werden kann.

Die dritte Möglichkeit der Erzeugung eines dreidimensional wirkenden Bildes ist die Veränderung der Farbe der Oberfläche mittels Laserlicht. Durch die Bearbeitung mittels Laserlicht verändert sich die Ausgangsfarbe in Richtung auf einen Ziel-Grauwert, der bei ca. 0,02 bis 0,2 liegt, abhängig von der Ausgangsfarbe. Wie stark die durch die Laserbearbeitung bewirkte Farbdifferenz von der Ausgangsfarbe in Richtung Zielfarbe ist, hängt von den Parametern der Laserbearbeitung ab.

Als Laser wird vorzugsweise eine gepulste Laserlichtquelle verwendet, insbesondere ein CO₂-Laser (Wellenlänge von 10 µm bis 12 µm) oder allgemein eine Laserlichtquelle mit einer Wellenlänge zwischen 220 und 350, insbesondere zwischen 250 und 280 nm.

Als Beispiel kann ein CO₂-Laser mit einer Wellenlänge von 10,6 µm und einer Leistung von 25 Watt sehr gut eingesetzt werden bei Papierstärken zwischen 0,1 mm und 1,5 mm. Das Laserlicht wird dabei
- auf der Höhe der ursprünglichen Oberfläche des Papiers oder dem gewünschten Endzustand der Oberfläche fokussiert, wenn ein so kleiner Fokuspunkt wie möglich, also hohe Leistung im Fokus, erzielt werden soll, oder
- bewusst oberhalb bzw. unterhalb dieser Bearbeitungsebene (ursprüngliche Oberfläche oder bereits bearbeitete Oberfläche, die bei geringem Abstand als identisch zu betrachten sind) eingestellt, wenn der bestrahlte Flächenbereich vergrößert werden soll und dadurch die in das Papier eingebrachte Leistung pro Fläche verringert werden soll.

Entweder wird der Laserstrahl immer im gleichen Winkel, insbesondere im rechten Winkel, zur Oberfläche des Papiers ausgerichtet und das Papier relativ zur Laserlichtquelle bewegt, insbesondere die Laserlichtquelle feststehend belassen und der Arbeitstisch zusammen mit dem darauf liegenden Papier bewegt. Der Vorteil dieser Methode liegt darin, dass große Bearbeitungsflächen bis etwa 1 m x 1 m bearbeitet werden können.

Oder die Laserlichtquelle wird relativ zum Papier und damit dem Arbeitstisch nicht bewegt, jedoch der Laserstrahl auf seinem Weg zum Papier über zwei schwenkbare ansteuerbare Spiegel abgelenkt und die Fokussierung nachgeführt.

Da hier die Ablenkung nicht zu groß werden darf, ist das Arbeitsfeld begrenzt auf eine Fläche von beispielsweise 10 x 10 cm, jedoch ist die Arbeitsgeschwindigkeit dieser sogenannten Galvo-Laser deutlich höher als die der zuvor beschriebenen Flachbettlaser. Die Nachführung der Fokussierung ist notwendig, da sich durch die veränderbare Umlenkung über wenigstens zwei angesteuerte Spiegel die Strahllänge ändert und dabei insbesondere auch der Abstand vom letzten Umlenkspiegel bis zum Auftreffpunkt des Laserstrahls auf dem Papier. Um die Lage des Fokuspunktes zur Höhenlage des Papiers immer gleich zu halten, z. B. auf der ursprünglichen Papieroberfläche, muss mit Änderung dieser Länge auch die Fokussierung nachgeführt werden, insbesondere in oder gegen die Strahlrichtung.

Als Abstand zwischen Laserlichtquelle und Papier werden 20 bis 100 mm, insbesondere 50 bis 100 mm gewählt.

Als Parameter des Lasers werden die für die jeweilige Bildwirkung maximale Energie, die Vorschubgeschwindigkeit des Lasers relativ zum Papier, die Pulsrate des Lasers, die Höhenlage des Fokuspunktes des Lasers und/oder ggf. auch die Auflösung, mit welcher der Laser das Papier bearbeiten soll, gesteuert. Diese Steuerung kann manuell erfolgen, vorzugsweise jedoch automatisch aufgrund einer vorgegebenen Bildvorlage, also entweder eines Pixelbildes, Vektorbildes oder eines Grauwertbildes, wobei auch Farbbilder von entsprechenden Programmen als Vorstufe in ein Grauwertbild umgewandelt werden können.

Bei einer Rasterung wird die Tiefe der Einschüsse über die Energie und/oder Geschwindigkeit und/oder Auflösung des Lasers gesteuert, die Größe, also der Durchmesser, der Einschläge über die Größe der Auftrefffläche des Lasers auf der Oberfläche, welches davon abhängt, auf welcher Höhe oberhalb oder unterhalb der Auftreffebene der Laserstrahl fokussiert wird. Der Abstand der Einschüsse wird vorzugsweise durch Regelung der Vorschubgeschwindigkeit bei konstanter Pulsrate des Lasers verändert.

Der durchgehend flächige bzw. linienförmige Materialabtrag mit nur einer Schichttiefe, also ein gravurähnlicher Abtrag, wird erreicht, indem die einzelnen Einschläge in Vorschubrichtung geringer zueinander beabstandet sind als der Durchmesser der Einschläge, insbesondere der Durchmesser des Bodens des Einschlages, und zu diesem Zweck muss lediglich die Vorschubgeschwindigkeit einmalig entsprechend eingestellt werden, die danach - zusammen mit allen anderen Parametern - unverändert bleibt.

Für eine tatsächliche Ausbildung eines Reliefs durch Abtrag unterschiedlicher Schichten wird für jede Schicht zum einen die abzutragende Schichtdicke festgelegt durch Festlegen der Einschusstiefe, wobei ein durchgängig flächiger Abtrag wiederum erreicht wird durch seitliches Überlappen der Einschüsse wie vorbeschrieben, also eine entsprechende Wahl vorzugsweise der Vorschubgeschwindigkeit.

Darüber hinaus kann innerhalb einer Schicht - sofern diese Schicht danach nicht weiter durch einen nächsten Schichtabtrag abgenommen wird - zusätzlich in der Oberfläche eine Rasterung durch voneinander getrennte Einschüsse vorgenommen werden.

Für das Aufrauhen muss ebenfalls vorzugsweise eine flächige Bearbeitung erzielt werden, so dass also die einzelnen Lasereinschläge sich seitlich zueinander berühren bzw. Überlappen.

Das Lösen des Bindemittels bzw. Entfernen des Bindemittels zwischen den Fasern in dem oberflächennahen Bereich und vor allem die Eindringtiefe, für die diese Wirkung eintreten soll, hängt vom Material einerseits des Bindemittels und andererseits der Fasern ab.

Der Energieeintrag in das Papier pro Flächeneinheit muss dabei deutlich geringer gewählt werden als für einen vollständigen Materialabtrag, weshalb entweder die Energie des Lasers entsprechend reduziert werden muss oder die Größe der Auftrefffläche durch entsprechende vorbeschriebene Veränderung der Höhenlage des Fokus entsprechend vergrößert werden, wobei letzteres zu bevorzugen ist aufgrund der dann größeren Bearbeitungsgeschwindigkeit gemessen in bearbeitete Fläche pro Zeiteinheit.

Die Oberflächenfarbe wird beeinflusst, indem das Maß der Farbdifferenz zwischen Ausgangsfarbe und Endfarbe in Richtung auf den Ziel-Grauwert der Ausgangsfarbe verändert wird. Diese Farbdifferenz hängt maßgeblich vom Energieeintrag pro Flächeneinheit ab. Da die Farbdifferenz - bei ansonsten unveränderten Parametem - mit zunehmender Abtragtiefe (bei einschichtigem Abtrag) zunimmt und bei einer lediglich Aufrauung der Oberfläche ohne eigentlichen Materialabtrag noch keine Farbdifferenz eintritt, muss der Energieeintrag zwischen dem für eine Aufrauung und dem für starken Materialabtrag variieren.

Dementsprechend kann bei einem Relief auch bei den tief abgetragenen Bereichen noch eine Farbveränderung mit geringer Farbdifferenz erzielt werden, indem in einem separaten zusätzlichen Arbeitsschritt nach dem Materialabtrag nur zum Zwecke der Herstellung dieser Farbdifferenz ein erneuter Laserbeschuss zum Zwecke der Farbveränderung der bereits abgetragenen Oberfläche erfolgt.

Umgekehrt ist es dagegen nicht möglich, eine starke Farbdifferenz ohne bzw. mit nur geringem Materialabtrag zu bewirken.

Die Umsetzung eines Graustufenbildes kann - neben der Darstellung durch entsprechende Rasterung - durch eine entsprechende Reliefbildung und/oder Farbveränderung oder Kombination von beidem erfolgen:

Bei negativem, also konkavem, Relief wird die Gesamt-Abtragtiefe, also u. U. über mehrere Schichten hinweg - umso größer gewählt, je dunkler die Graustufe des entsprechenden Teils der Vorlage ist. Im gleichen Sinne kann auch - bei einer helleren Ausgangsfarbe als dem Zielgrauwert - die Farbdifferenz um so größer gewählt werden, je dunkler der Grauwert in der Vorlage ist, oder beide Effekte können kombiniert werden, was die dreidimensionale Wirkung verstärkt.

Bei einer dunklen Ausgangsfarbe kann entweder analog verfahren werden, oder - bevorzugterweise - wird umgekehrt bei der Farbveränderung verfahren, also je dunkler der Grauwert der Vorlage ist, um so geringer wird die Farbdifferenz gewählt, um in der Realität den bearbeiten Bereich um so dunkler erscheinen zu lassen, je dunkler die Vorlage im entsprechenden Bereich ist.

Aus Kontrastgründen ist dies natürlich hauptsächlich dann sinnvoll, wenn die Umgebung des bearbeiteten Bereiches dazu kontrastiert, also heller ist, z. B. die Umgebung des Rellefs ein durch maximal und auf helle Zielfarbe hin abgetragener Bereich ist.

Neben der Kombination von reliefartiger Abtragung und Farbveränderung kann zusätzlich - vor allem in den nicht abgetragenen Bereichen - auch die Rasterung damit kombiniert werden.

Zusätzlich muss - beim Materialabtrag ebenso wie bei der Farbveränderung mittels Laser und auch beim Aufrauhen der Oberfläche - beachtet werden, dass die Energieaufnahme In Papier pro Flächeneinheit bei gleichen Laserparametem, also auch bel gleich großer auftreffender Energiemenge pro Flächeneinheit auf dem Papier, unterschiedlich sein kann, da dunkle Oberflächen, also dunkles Papier, die Energie des Lasemtrahls in einem höheren Maß absorbiert und in geringerem Maße reflektiert als eine helle Oberfläche, was das Bearbeitungsergebnis in der Praxis sichtbar beeinflusst, so dass auch dieser Umstand bei der Steuerung mit berücksichtigt werden muss.

Als Beispiel eines Materialabtrags bei einem 250g/qm schweren Papier von ca. 0,5 mm Dicke wurde bei einem CO₂-Laser mit einer Wellenlänge von 10,6 µm und einer Leistung (elektrische Aufnahmeleistung des Lasers) von z. B. 25 Watt Höchstleistung folgende Parameter gewählt, mit denen ein Materialabtrag zwischen 0% und max. 10%, besser nur max. 5%, und einer Maximal-Laufgeschwindigkeit von 1,5 m/s der Dicke des Papiers bewirkt wird (höhere Leistungen bis z. B, 100 W müssen ggf. stärker reduziert werden):
Geschwindigkeit: 0% bis 100%, insbesondere bis 70% der Maximalgeschwindigkeit,
Leistung: 0% bis 40% der Maximalleistung.

Dabei wird primär die Leistung verändert, und mit der relativ höchsten Geschwindigkeit (70%) so lange gefahren, bis die dadurch erreichbaren Möglichkeiten nicht mehr genügen und zusätzlich auch die Geschwindigkeit reduziert werden muss. In der Praxis wird der Übergang zwischen Rasterung und Abarbeiten eines flächigen Reliefs erzielt, indem bei Reliefbearbeitung der Wert "DPI" also "Dots per Inch = Lasereinschläge pro Quadratzoll" so hoch festgelegt wird, dass eine gegenseitige Überlappung der einzelnen Einschläge unter allen sich sonst ändernden Parametem sichergestellt ist.

Der Durchmesser des Fokuspunktes wird beim Herstellen eines Reliefs so klein wie möglich gewählt, vorzugsweise kleiner als 0,1 mm Durchmesser des Fokuspunktes, insbesondere kleiner als 0,01 mm des Fokuspunktes.

Die Höhenlage des Fokuspunktes des Laserstrahls wird bei Papieren unter z. B. 0,5 oder 1,0 mm Dicke auf die Oberfläche des Papiers eingestellt, und danach meist kein Nachführen des Abstandes zwischen z. B. Laserlichtquelle und Substrat in Z-Richtung entsprechend der bereits durchgeführten Abtragung durchgeführt.

Eine gezielte Fokussierung oberhalb oder unterhalb der Bearbeitungsebene, insbesondere auch außerhalb der Dicke des Papiers, erfolgt vorzugsweise nur beim Aufrauhen oder der Farbbeeinflussung mit geringer Farbdifferenz. Bei einem Abstand zwischen Laserlichtquelle und Papier von 50 mm wird der Abstand zwischen Fokuspunkt und Bearbeitungsebene max. 5 mm, insbesondere max. 3 mm, insbesondere max. 1 mm betragen.

Dabei wurde im einschichtigen Verfahren gearbeitet. Aufgrund der Verwendung eines weißen Papiers ergab sich somit mit zunehmender Abtragtiefe auch eine zunehmende Farbdifferenz von der weißen Ausgangsfarbe zur etwas dunkleren Zielfarbe hin, so dass die räumliche Wirkung des sehr flachen Reliefs durch die Farbveränderung verstärkt wird und das Relief plastischer wirkt, als es in Wirklichkeit ist.

Dieser Effekt kann natürlich weiter verstärkt werden, durch Einbringen einer konventionellen Prägung des Papiers, z.B. von der nicht bearbeiteten Rückseite des Papiers her, welche die Reliefwirkung unterstützt und verstärkt. Ferner lassen sich insbesondere sehr ungewöhnliche Kombinationswirkungen durch Kombinieren mit den einschlägigen Drucktechniken erzielen.

Während ein so bearbeitetes Papier bei Bestrahlung mit Auflicht, vor allem Tageslicht, als Schriftgut oder Bildträger und damit vor allem für Werbezwecke oder als Kunstobjekt verwendet wird, sind - nicht nur, jedoch vor allem - im Durchlichtverfahren auch andere Nutzungen möglich: Einerseits die optisch verstärkende Wirkung vor allem als Werbemittel, wie sie im Durchlichtverfahren auftritt, andererseits abseits der Werbewirkung die Verwendung im Durchlichtverfahren als z.B. Lampenschirm, Aufsteller oder anderes Durchlichtobjekt.

Ein wesentlicher weiterer Anwendungszweck könnte jedoch die Verwendung eines so bearbeiteten Bereiches als Sicherheitsmerkmal auf Aktien, Pfandbriefen, Eintrittskarten, Banknoten oder Dokumenten wie Pässen und Ausweisen sein.

Dabei kommt insbesondere die doppelte Sicherheitswirkung zum Tragen, wie sie bei Bearbeitung eines Papiers mittels Laser von beiden Seiten her erzielt werden kann:

Vor allem, wenn sich die bearbeiteten Bereiche dabei teilweise überlappen, ist es möglich, im Überlappungsbereich eine unterschiedliche Bildwirkung zu erzeugen als in einem der nicht überlappten Bereiche, und dabei ist die Bildwirkung natürlich wiederum unterschiedlich, je nachdem von welcher Seite des Papiers aus man es betrachtet, und ob man die Betrachtung im Auflichtverfahren oder im Durchlichtverfahren durchführt. Zusätzlich kann - bei nicht laminierten Dokumenten oder Geldscheinen - die reliefartige Bearbeitung gefühlt werden, und - im Gegensatz zu einer Prägung - auch nicht ohne weiteres, absichtlich oder unabsichtlich beseitigt werden.

Dadurch ist es möglich, Sicherheitsüberprüfungen kombiniert durch Tasten und Betrachten durchzuführen, dabei beim Betrachten wieder mittels unterschiedlicher, jedoch sehr einfach zu realisierender Methoden und Hilfsmittel (Lichtquelle).

Die Reliefbildung, vor allem alleine, kann zur Herstellung von Blindenschrift verwendet werden.

### c) Ausführungsbeispiele

Eine Ausführungsform gemäß der Erfindung ist im Folgenden anhand der Figuren beispielhaft näher beschrieben. Es zeigen:
- Fig. 1:: einen Querschnitt durch ein Papier, bei dem Flächenbereiche mittels Laser abgetragen sind,
- Fig. 2:: einen Querschnitt durch ein Papier mit im Wesentlichen einzelnen Laser-Einschüssen,
- Fig. 3:: eine teilweise Schnittdarstellung durch ein Papier mit teilweise gerasterter und teilweise reliefartiger Oberflächenstruktur,
- Fig. 4:: einen Querschnitt durch ein beidseits mit Laser bearbeitetes Papier,
- Fig. 5:: eine weitere Querschnittsdarstellung eines mittels Laser bearbeiteten Papiers,
- Fig. 6:: ein mittels der erfindungsgemäßen Bearbeitung erzeugtes Bild,
- Fig. 7a:: die Farbveränderung in Abhängigkeit vom Ziel-Grauwert,
- Fig. 7b:: die Farbveränderung in Abhängigkeit der Energie, und
- Fig. 8:: eine kombinierte Prägung und Laserbearbeitung im Querschnitt.

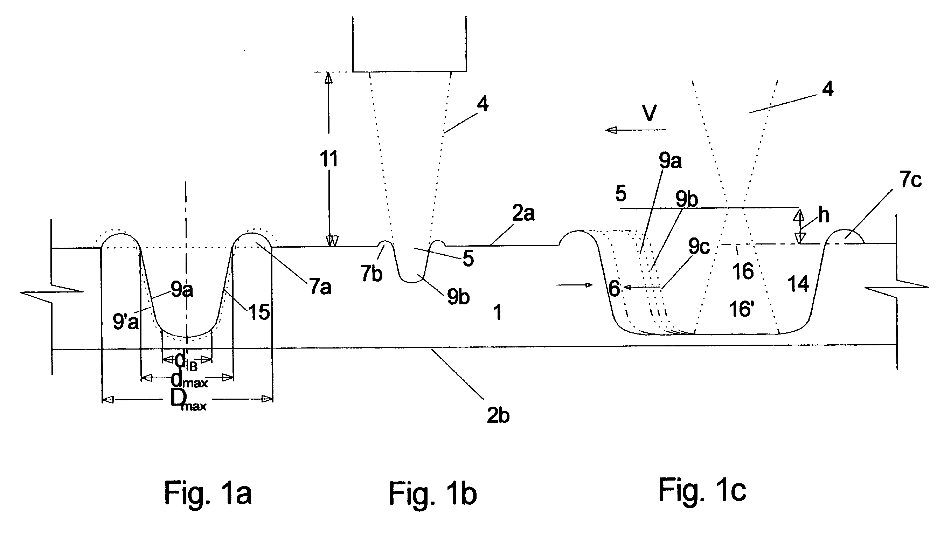

In Fig. 1a und 1b sind Lasereinschüsse 9a, 9b dargestellt, die die beiden Extreme eines teilweisen Materialabtrages darstellen:

Während der Lasereinschuss 9a eine so große Tiefe besitzt, dass er relativ zur Dicke des Papiers stark spürbar und sichtbar ist, ist der Einschuss 9b zu gering, dass er gerade eben noch einen sichtbaren und/oder spürbaren Materialabtrag in der Oberfläche 2a des Papiers 1 auf der mit dem Laser 3, 4 bearbeiteten Seite hervorruft. Diesen beiden Abtragungs-Extrema entsprechen die Energien E, und E₂.

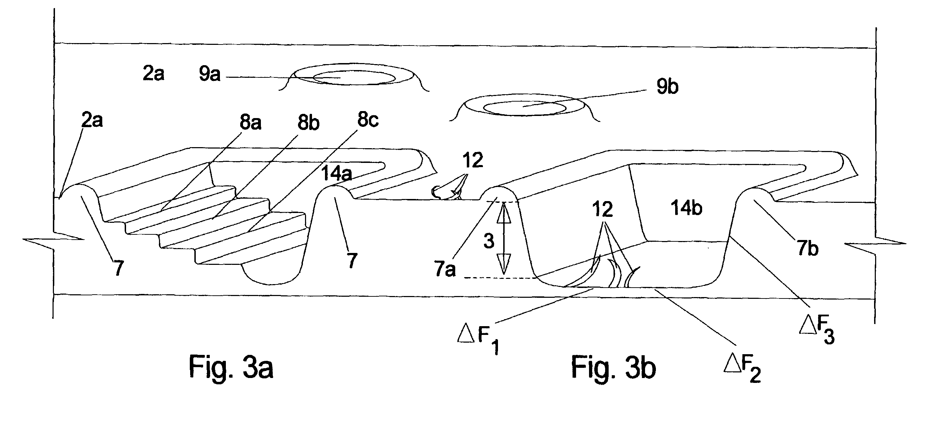

Fig. 1a und 1b, und in perspektivischer Ansicht am besten Fig. 3b zeigen grundsätzlich, dass das jeweilige Einschussloch eine kraterförmige Gestalt mit einem abgeflachten Boden besitzt mit einem Einschlag-Durchmesser d und einem Randdurchmesser D, die jeweils kreisförmig in der Aufsicht ausgebildet sind, denn die Energie des Laserstrahls bewirkt offensichtlich nicht nur die Ausbildung des kraterförmigen Einschusses 9a, 9b, sondern auch das Aufwerfen eines ringwulstförmigen Randes 7a, b, dessen Höhe und radiale Breite analog zur Energie wächst.

Fig. 1a zeigt ferner neben der Kontur eines Einschusses 9a die Kontur eines weiteren, größeren Einschusses 9a', die entsteht, wenn mit gleicher Energie E, ein Laserschuss auf ein Papier gleichen Materials, jedoch einer dunkleren Farbe ausgeführt wird, insbesondere bei einem durchgefärbten Papier, wodurch die Energieabsorption größer ist.

Bei beiden Einschüssen war dabei der Laserstrahl 4 auf die Höhe der Oberfläche 2a des Papiers 1 fokussiert, also der Fokuspunkt 5 hatte keine Höhenabweichung zur Bearbeitungsebene.

Die Figuren 1a und 1b lassen erkennen, dass die beiden Lasereinschüsse 9a, b einen unterschiedlichen optischen Eindruck auf den Betrachter hinterlassen, nicht nur aufgrund ihres größeren Durchmessers - mit als auch ohne Rand - in der Aufsicht, sondern auch aufgrund des unterschiedlichen Schattenwurfes in den kraterförmigen Einschuss 9a, b hinein aufgrund des umgebenden Randes 7a bzw. b und abhängig von der Beleuchtungsrichtung.

Die Steilheit der Flanken 15 des Einschusskraters können kaum beeinflusst werden und hängen - allerdings in nur geringem Maß - von dem Abstand 11 zwischen der Laserlichtquelle 10 und der Oberfläche 2a des Papiers bzw. dem Fokuspunkt 5 ab.

Fig. 1c zeigt einen flächigen Materialabtrag 14, wie er durch fortschreitenden Laserbeschuss in einer Richtung als Rinne oder bei zeilenförmiger Abtastung mittels Laser als Fläche entsteht. Dabei müssen die einzelnen Lasereinschüsse 9a, b, c in einem seitlichen Abstand 6 aufgebracht werden, der geringer ist als der Durchmesser d_{b} des Boden eines einzelnen Einschlages. Der Rand 7c ist dabei dementsprechend nur an den äußeren Rändern des Materialabtrages 14 vorhanden.

Zusätzlich ist dabei der Laserstrahl 4 auf eine andere Höhe fokussiert, so dass sich der Fokuspunkt 5 um den Höhenabstand h oberhalb der Bearbeitungsebene, also der Oberfläche 2a des Papiers 1, befindet.

Dadurch ist die Auftrefffläche 16 bzw. 16' des Laserstrahls auf der Oberfläche 2a bzw. dem Boden des Materialabtrags 14 größer, da sich der Strahl hinter dem Fokuspunkt 5 wieder aufweitet.

Um dabei die gleiche Abtragtiefe - wiederum in einer einzigen Schicht - zu erreichen, wie bei dem einzelnen Einschuss 9a gemäß Fig. 1a, muss wegen der geringeren Energiedichte pro Auftreff-Flächeneinheit (16) der Laserstrahl 4 im Falle der Fig. 1 c eine höhere Energie besitzen.

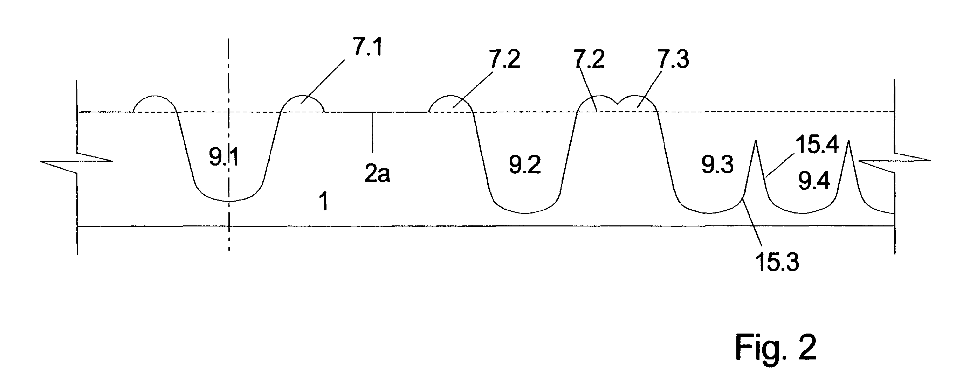

Fig. 2 zeigt ebenfalls im Querschnitt gleich tiefe, einzelne Lasereinschüsse 9.1 bis 9.4 in unterschiedlichem Abstand zueinander, jedoch nach wie vor im wesentlichen vereinzelt, was wiederum einen anderen optischen Eindruck als der flächige Materialabtrag 14 der Fig. 1c hinteriässt:

Während sich die Einschüsse 9.1 und 9.2 überhaupt nicht, auch nicht mit ihren Rändem 7.1 und 7.2, berühren, liegen die Einschüsse 9.2 und 9.3 so nahe zusammen, dass deren Ränder 7.2 und 7.3 teilweise ineinander übergehen und dadurch den Eindruck eines an dieser Stelle breiteren Zwischenwulstes ergeben.

Die Einschüsse 9.3 und 9.4 sind bereits so stark aneinander angenähert, dass deren Flanken 15.3 und 15.4 sich bereits unterhalb der Ausgangs-Oberfläche 2a des Papiers 1 ineinander übergehen, also im Bereich dazwischen das Niveau der Ausgangs-Oberfläche nicht mehr erreicht wird, und damit ein prinzipiell flächiger Materialabtrag erreicht wird, der jedoch im Gegensatz zum Materialabtrag 14 der Fig. 1 über keinen im Wesentlichen ebenen, sondern stark gezackten Boden verfügt.

Figur 3 zeigt eine flächige Darstellung eines bearbeiteten Papiers einschließlich eines Querschnittes durch das Papier. Dabei ist in Fig. 3a wiederum ein schichtweiser Materialabtrag 14a dargestellt, also eine rellefartige Ausbildung, die in diesem Fall in 5 Stufen erfolgt ist, und deren Abtragungsbereich insgesamt von einem Rand 7 umgeben ist. Dabei wurde die Abtragung schichtweise immer tiefer in den gewünschten Bereichen ersteilt, so dass jedoch die erste Schicht den größten Flächenumfang einnahm, und dementsprechend auch der umlaufende Rand 7 entsprechend der Abtragtiefe dieser ersten Schicht 8a über den gesamten Umlauf gleich groß ist.

Dagegen zeigt Fig. 3b einen Materialabtrag 14b, der im gesamten Flächenbereich gleich tief ist mit einer Gesamt-Abtragtiefe 3, jedoch abschnittweise ganz unterschiedlich hergestellt sein kann:

Während im linken Bereich dieses Materialabtrages 14 die Materialabtragung in einer Schicht über die gesamte Tiefe erfolgt sein kann, könnte dies im rechten Bereich der Materialabtragung 14b in z. B. fünf Schichten analog des Materialabtrages 14a in Fig. 3a geschehen sein, und beispielsweise im mittleren Bereich in nur zwei Schichten. Dementsprechend ist dann auch einerseits der Rand 7a bei der einschichtigen tiefen Abtragung höher aufgeworfen als der Rand 7b neben dem vielschichtig abgetragenen rechten Bereich.

Zusätzlich würde sich bei dieser Behandlung in den drei Bereich eine jeweils unterschiedliche Farbänderung δF₁, δF₂, δF₃ in den drei Bereichen von links nach rechts ergeben, wobei - wir unterstellen die Behandlung eines annähernd weißen Papiers - die Farbänderung δF₁ bei der einschichtigen Abtragung, also mittels hohen Energieeintrages, stärker wäre als die Farbänderung δF₂ im zweiten und diese wiederum stärker als im dritten Bereich die Farbänderung δF₃.

In Fig. 3 sind femer - einerseits im Bereich zwischen den Materialabtragungen 14a und 14b und andererseits auf dem Boden der Materialabtragung 14b einzelne hochstehende Fasern 12 des Papiers dargestellt. Im Gegensatz zu der sonst glatten, meist mechanisch sogar verdichteten, Oberfläche 2a des Papiers stehen diese Fasern hoch, da mittels Laserbeaufschlagung mit geringerer Energie als beim Materialabtrag die Fixierung der Fasern gegeneinander gelöst wird, indem durch die Wärmeeinwirkung des Lasers entweder das Bindemittel zwischen den Fasern gelöst wird oder auch der Feuchtigkeitsanteil in den Fasern erwärmt und die Fasern dadurch gedehnt werden, so dass sie sich aus dem Verbund selbst herausdrücken, jedenfalls was die Oberflächen nahe liegenden Enden der Fasern 12 betrifft.

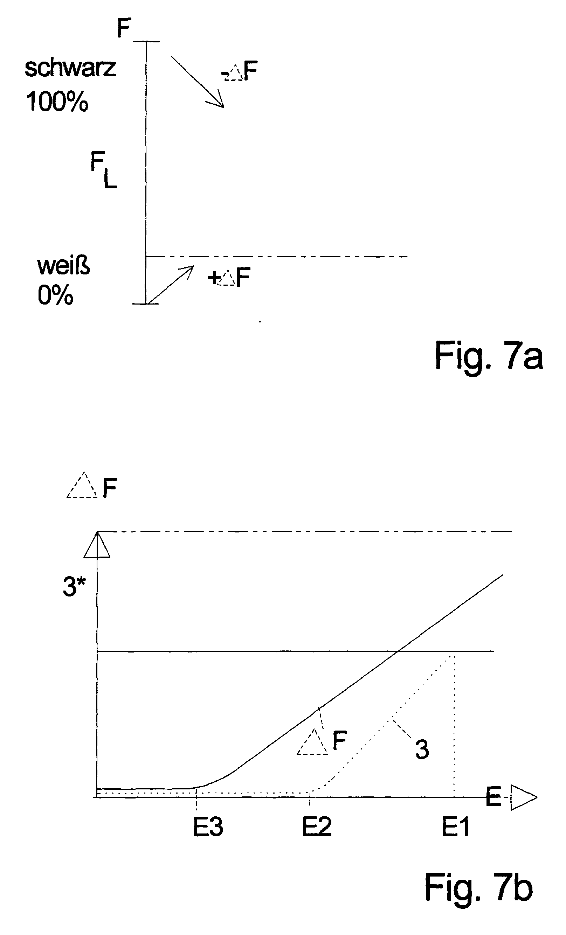

### Fig. 7b zeigt die notwendige Energieleistung:

Dabei ist zu erkennen, dass bei einer Energie des Laserstrahls zwischen 0 und E2 nur eine - mit der Energie zunehmende - Farbveränderung δF, jedoch noch kein Materialabtrag (Abtragtiefe 3) auftritt.

Erst oberhalb der Energie E2 bis zu einer Energie E1 hin, welche die Dicke 3* des Papiers durchstoßen kann, tritt ein Materialabtrag mit zunehmender Abtragtiefe 3 auf, und in diesem Bereich nimmt ebenfalls die Farbdifferenz δF noch weiter zu, und zwar asymptotisch bis zu einem Maximalwert, und möglicherweise über den Energiewert E1 sogar hinaus.

Im Wertebereich der Energie des Laserstrahls unterhalb der Schwelle E2, nämlich zwischen 0 und E3, tritt noch keine Farbdifferenz δF auf, wohl jedoch - abhängig von der Papierart - bereits eine Veränderung der Struktur der Oberfläche, z. B. ein Aufrauhen.

Fig. 3 zeigt ferner einige einzelne, nicht zusammenhängende Einschüsse 9a, 9b, wie sie zur Erzielung einer Rasterung einer ansonsten nicht bearbeiteten Oberfläche 2a verwendet werden.

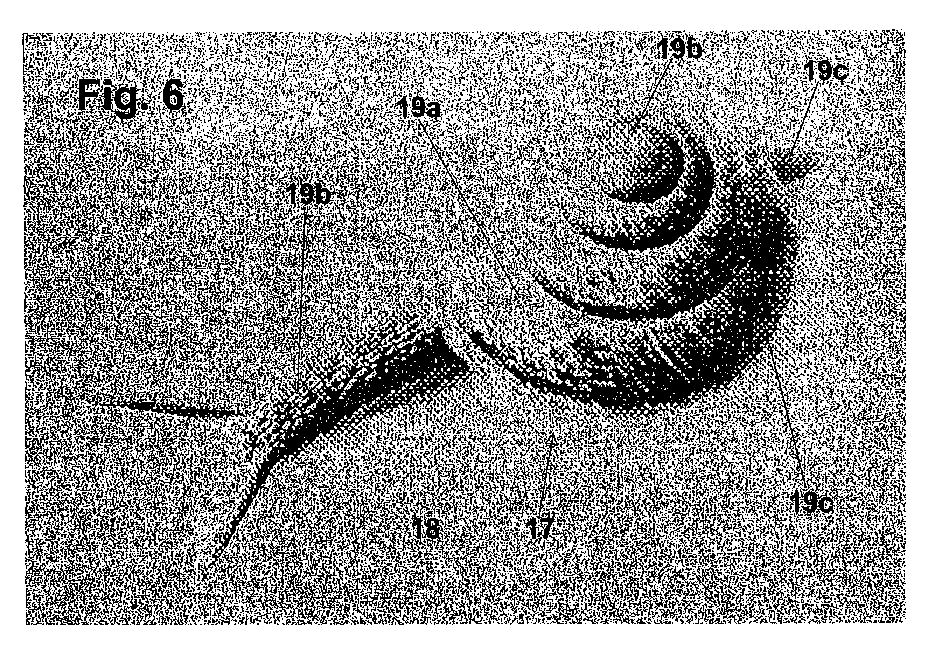

Fig. 6 zeigt in der Aufsicht ein derartiges konkretes Bearbeitungsergebnis, nämlich eine dreidimensional, jedoch positiv, also erhaben, dargestellte Schnecke.

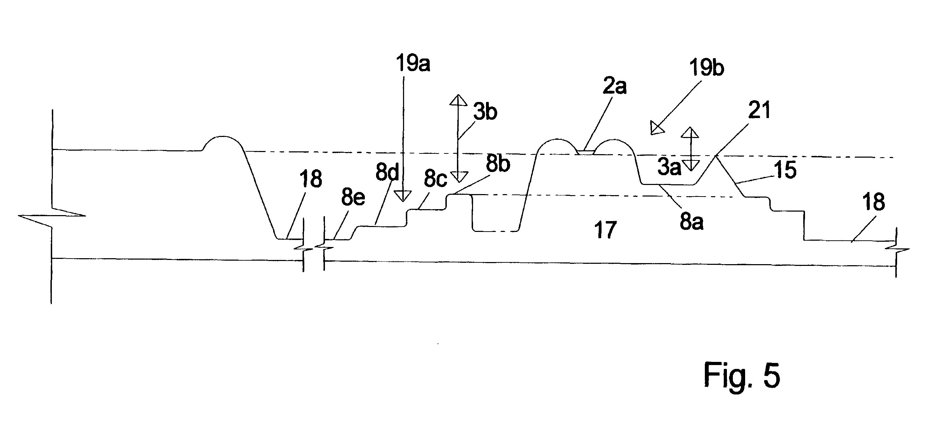

Dabei ist - entsprechend der Querschnittsdarstellung der Fig. 5 - die Umgebung 18 der Schnecke 17 bis auf eine Schichttiefe 8e abgearbeitet, also vertieft, so dass demgegenüber die Schnecke 17 erhaben verbleibt, und zwar bearbeitet mit den Möglichkeiten, wie sie anhand der Figuren 1 bis 3 beschrieben wurden, also auch vollständig unbearbeitet verbliebenen Bereichen in Form der ursprünglichen Oberfläche 2a.

So zeigt der Bereich 19a - in der Fig. 6 nicht erkennbar - zwar einen flächigen Materialabtrag, jedoch in unterschiedlichen Schichttiefen, also mit unterschiedlichen Abtragtiefen 3a,b,c,.., wodurch eine reliefartig erhabene Ausbildung erfolgt.

In den Bereichen 19b sind die einzelnen Einschüsse 9a,b zwar bereits zusammenhängend, wie z. B. in Fig. 1b oder in Fig. 5 im mittleren Bereich dargestellt, jedoch verbleiben dazwischen noch einzelne kleine, unbearbeitete Bereiche der ursprünglichen Bereiche 2a.

Im Bereich 19c dagegen ist lediglich noch eine Rasterung vorhanden, indem die dort die im wesentlichen unbearbeitete ursprüngllche Oberfläche 2a nur einzelne, nicht miteinander in Verbindung stehende Lasereinschüsse zeigt, deren Größe und Abstand varileren entsprechend der gewünschten Wirkung.

Im Fall der Fig. 6 wurde mit einem durchgefärbt dunklen Papier - dunkler als der Ziel-Grauwert F_{L} - gearbeitet, so dass die stattfindenden Farbveränderungen δF eine Aufhellung bewirken.

Dementsprechend sind die unbearbeitet stehen bleibenden Bereiche der Oberfläche 2a dunkler als die Bereiche, die einem Materialabtrag unterzogen wurden.

Anhand der durch zwei Materialabtragungs-Flanken 15 gebildeten Spitze 21 in Fig. 5 wird auch klar, dass - obwohl diese Spitze 21 dieselbe Höhenlage einnimmt wie der unbearbeitete Bereich 2a der ursprünglichen Oberfläche - die Spitze 21 mangels unbearbeiteter Fläche optisch nur die Farbwirkung ihrer beiden Flanken 15 besitzt, und damit eine andere Farbe als der vollständig unbearbeitete Oberflächenbereich 2a.

Fig. 7a zeigt ferner, dass die Farbdifferenz δF eine Aufhellung (-δF) oder eine Abdunklung (+δF) bedeutet, je nach dem, ob die Ausgangsfarbe des Substrates, also z. B. Papiers, heller oder dunkler als der Ziel-Grauwert F, ist, der seinerseits kein fixer Wert ist, sondem von vor allem der chemischen Zusammensetzung des Papiers abhängt.

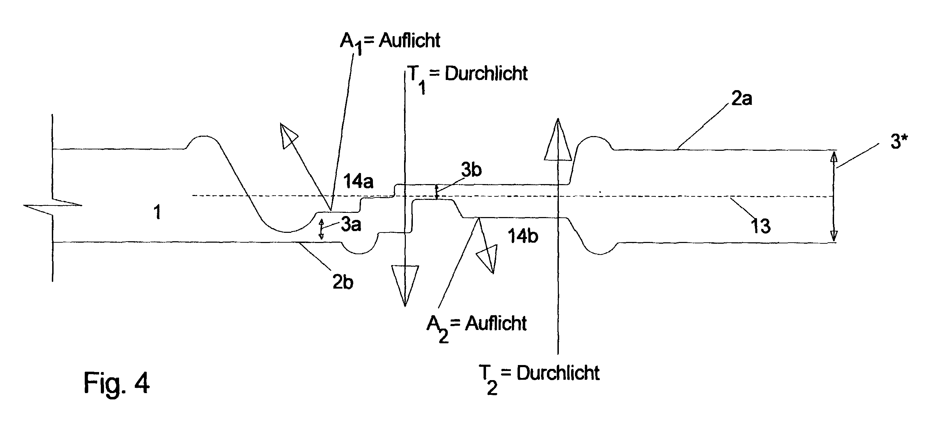

Fig. 4 zeigt ein Papier 1, welches von beiden Oberflächen 2a, 2b her mittels Laser bearbeitet ist und Insbesondere Materialabtragungen 14a, 14b auf den gegenüberliegenden Seiten aufweist, die sich flächenmäßig überlappen. Dabei erstrecken sich die Materialabtragungen 14 von beiden Seiten -, allerdings in unterschiedlichen Flächenbereichen - auch über die Mittelebene 13 des Papiers hinweg, erreichen jedoch niemals den gegenüberliegenden Materialabtrag, bewirken also keine Durchstoßung des Papiers.

Theoretisch könnten die Materialabtragungen 14a,b auch nur jeweils maximal bis zur Mittelebene 13 reichen, wobei dann für die einzelnen Materialabtragungen 14a,b jedoch nur die Hälfte der Dicke 3* des Papiers zur Verfügung stünde.

Fig. 4 lässt erkennen, dass sich bei Betrachtung des so bearbeiteten Papiers von den beiden Seiten der Oberflächen 2a,b her jeweils in Aufsicht unterschiedliche Bilder A1, A2 erkennen lassen, entsprechend der dort vorhandenen Materialabträge 14a,b und eventuell vorhandener zusätzlicher Veränderungen wie Aufrauungen und Farbdifferenzen.

Da jedoch die verbleibende Dicke 3a,b zwischen den Materialabtragungen 14a, b in deren Überlappungsbereich unterschiedlich ist, und zwar zum Teil gering genug, um eine teilweise Durchleuchtung mittels Durchlicht zu ermöglichen, ist ebenfalls offensichtlich, dass sich bei Betrachtung von den beiden Seiten her jeweils im Gegenlicht (Durchlicht) wiederum unterschiedliche Bilder T1, T2 ergeben, die ja entstehen aus der jeweiligen Oberflächenbeschaffenheit (z. B. Materialabtrag 14a oder 14b) und die zusätzliche Durchlicht-Wirkung im Überlappungsbereich der beiden Materialabtragungen.

Auf diese Art und Weise lassen sich also durch Wechsel von Auflicht zu Durchlicht und Betrachtung von den beiden unterschiedlichen Seiten insgesamt vier unterschiedliche Bilder A1, A2, T1, T2 erzeugen, was ein hervorragendes Sicherheitsmerkmal darstellt.

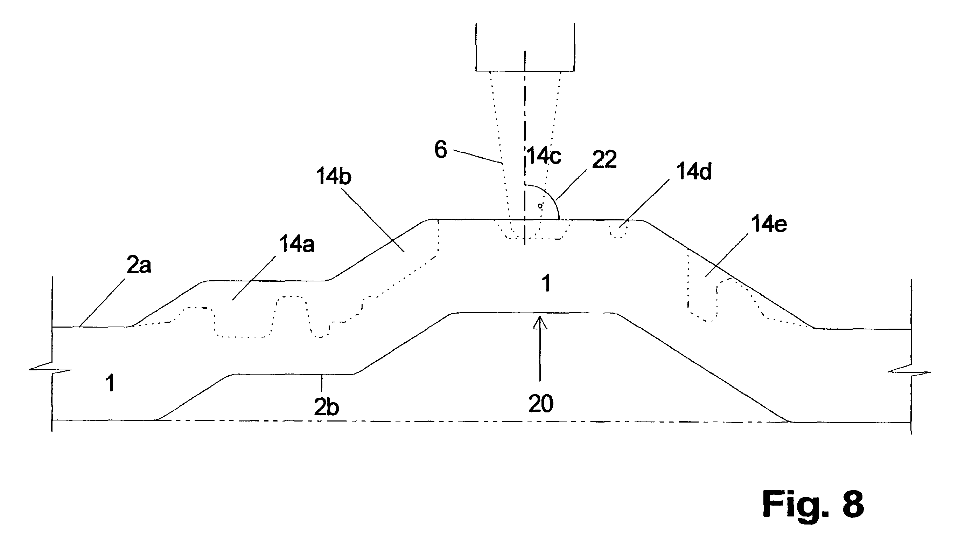

Fig. 8 zeigt ferner im Querschnitt ein Papier 1, welches einerseits von seiner Oberfläche 2a her mittels Lasermaterialabträge 14a-b aufweist, und in diesem Bereich zusätzlich von der anderen Oberfläche 2b her konventionell eine Prägung 20, hergestellt mittels eines Prägestempels, aufweist.

Wie Fig. 8 zeigt, können die Materialabträge 14a,b,.. dabei so eingesetzt werden, dass sie die positiv sichtbare Prägung des Papiers 1 noch verstärken, und damit die dreidimensionale Wirkung der Prägung vergrößert wird, vor allem wenn Materialabträge 14b in den Bereichen der Flanken der Prägung 20 eingesetzt werden.

Die Prägung 20 kann prinzipiell nach der Laserbearbeitung stattfinden, muss dann jedoch eine Positionierung der Materialabträge 14a, b relativ zur Position der Prägung 20 erfahren.

Der Vorteil dieser Vorgehensweise besteht jedoch darin, dass bei Laserbearbeitung vor der Prägung 20 die Oberfläche 2a im gesamten Bearbeitungsbereich auf der selben Höhenlage liegt, also eine Nachjustierung der Höhenlage des Fokus des Lasers in der Regel nicht notwendig ist.

Bei umgekehrter Vorgehensweise, also erst Prägung des unbearbeiteten Papiers, und danach Laserbearbeitung, muss in aller Regel eine Höhenjustierung des Abstandes 6 zwischen Laserlichtquelle 10 und der dem jeweiligen Bereich des Papiers 1 durchgeführt werden, jedoch kann die Positionierung in Querrichtung der Papierebene auf sehr einfache Art und Weise dadurch erfolgen, dass mittels der üblicherweise an solchen Laserbearbeitungsmaschinen vorhandenen Tastvorrichtungen der Bereich des höchsten Punktes des geprägten Papiers mit der Tastvorrichtung abgetastet und darum mit deren Position bestimmt wird.

### BEZUGSZEICHENLISTE

- 1: Papier
- 2a,b: Oberfläche
- 3: Abtragtiefe
- 3*: Dicke
- 4: Laserstrahl
- 5: Fokuspunkt
- 6: Abstand
- 7: Rand
- 8a,b: Schicht
- 9a,b: Einschuss
- 10: Laserlicht-Quelle
- 11: Abstand
- 12: Faser
- 13: Mittelebene
- 14: Materialabtrag
- 15: Flanke
- 16,16': Auftreff-Fläche
- 17: Schnecke
- 18: Umgebung
- 19a,b: Bereich
- 20: Prägung
- 21: Spitze
- 22: Winkel

- δF: Farbänderung
- Fₗ: Ziel-Grauwert
- h: Höhenabstand
- d_{b}: Boden-Durchmesser
- d: Einschlag-Durchmesser
- D: Rand-Durchmesser
- E: Energie
- v: Vorschub-Geschwindigkeit
- A1,A2: Auflicht-Bild
- T1,T2: Durchlicht-Bild

## Patentansprüche

1. Verfahren zum Erzeugen eines dreidimensional wirkenden Bildes auf einem dünnen, insbesondere brennbaren und/oder organischen Substrat, insbesondere Papier (1),
**dadurch gekennzeichnet, dass**
die Bildwirkung durch wenigstens teilweises Abtragen der Oberfläche (2a) des Substrates mittels Laserlicht (4) erfolgt.

2. Verfahren zum Erzeugen eines dreidimensional wirkenden Bildes auf einem dünnen, insbesondere brennbaren und/oder organischen Substrat, insbesondere Papier (1), insbesondere nach Anspruch 1,
**dadurch gekennzeichnet, dass**
die dreidimensionale Bildwirkung erzielt wird durch Veränderung der Struktur der Oberfläche (2a) durch Aufrauhen mittels Laserlicht (4) indem insbesondere bei faserförmigem Substrat die freien Enden der Fasern (12) separiert werden durch Entfernung des Bindemittels zwischen den Fasern (12), insbesondere bei vor der Laserbearbeitung verdichteten Substrat-Oberfläche (2a).

3. Verfahren nach Anspruch 2,
**dadurch gekennzeichnet, dass**
- das Maß der Aufrauung der Oberfläche (2a) im bearbeiteten Bereich unabhängig von der Abtragtiefe (3) ist und insbesondere als zusätzlicher Schritt durch Laserbehandlung nach dem eigentlichen Materialabtrag bewirkt wird, und/oder insbesondere
- das Laserlicht (4) ein gepulstes Laserlicht ist, und/oder insbesondere
- die Laserlichtquelle (10) ein CO₂-Laser, insbesondere mit einer Wellenlänge von 10 bis 12 µm ist.

4. Verfahren nach einem der vorhergehenden Ansprüche,
**dadurch gekennzeichnet, dass**
- das Laserlicht (4) eine Wellenlänge von 220 bis 350 nm, insbesondere von 250 bis 280 nm besitzt, und/oder insbesondere
- das Laserlicht (4) auf die Oberfläche (2a) oder einen Punkt im Inneren des Substrates fokussiert wird und das Bild durch Relativbewegung zwischen Laserlicht und Substrat, und insbesondere ohne Blende, erzeugt wird, und/oder insbesondere
- bei der Bearbeitung der Laserstrahl (4) immer im gleichen Winkel, insbesondere einem rechten Winkel (22), zur Oberfläche (2a) des Substrates gehalten wird und insbesondere das Substrat gegenüber der feststehenden Laserlichtquelle (10) bewegt wird, wenigstens in den beiden Richtungen (X und Y) der Ebene des Substrates und ggf. auch zusätzlich in Z-Richtung.

5. Verfahren nach einem der vorhergehenden Ansprüche,
**dadurch gekennzeichnet, dass**
- bei der Bearbeitung die Laserlichtquelle (10) relativ zur Oberfläche (2a) des Substrates unverändert belassen wird und der Laserstrahl (4) über schwenkbare und/oder verlagerbare Spiegel in seinem Strahlengang die Auftrefffläche (16, 16') des Laserstrahls (4) auf der Oberfläche (2a) des Substrates verlagert wird unter Veränderung des Winkels, unter dem der Laserstrahl (4) auf der Oberfläche (2a) auftrifft, und/oder insbesondere
- der Abstand zwischen Laserlichtquelle (10) und Substrat 20 bis 100 mm, insbesondere 50 bis 100 mm, beträgt.
**(Rastern)**

6. Verfahren zum Erzeugen eines dreidimensional wirkenden Bildes auf einem dünnen, insbesondere brennbaren und/oder organischen Substrat, insbesondere Papier (1),
**dadurch gekennzeichnet, dass**
- die Bildwirkung durch Rastern der Oberfläche (2a) mit Lasereinschüssen (9a,b,..) erzielt wird, deren gegenseitiger Abstand (11), Abtragtiefe (3), Durchmesser (d,D) und/oder Höhe und radiale Erstreckung der Randaufwölbung (7) gesteuert werden mittels Veränderung der Vorschubgeschwindigkeit (v), der Energie (E) des Laserlichtes (4) und/oder der Höhe (4) des Laserfokus-Punktes (5) relativ zur Oberfläche (2a) des Substrates, und/oder insbesondere
- beim Rastern insbesondere die einzelnen Lasereinschläge (9a,b,..) keine Berührung oder maximal eine Berührung der Ränder (7) der Einschläge gegeneinander aufweisen.
**(Relief allg.)**

7. Verfahren zum Erzeugen eines dreidimensional wirkenden Bildes auf einem dünnen, insbesondere brennbaren und/oder organischen Substrat, insbesondere Papier (1),
**dadurch gekennzeichnet, dass**
- die Bildwirkung erzielt wird durch reliefartiges Abtragen des Substrates von der Oberfläche (2a) her bis auf eine definierte, variable Abtragtiefe (3), die gesteuert wird insbesondere durch Vorschubgeschwindigkeit (v), Energie (E) und/oder Pulsrate des Laserstrahls und/oder Höhenlage (h) des Fokuspunktes (5) des Laserstrahles (4) relativ zur Oberfläche (2a) des Substrates, und/oder insbesondere
- ab einer Dicke des Substrates von mehr als 1 mm, insbesondere mehr als 0,6 mm, der Abstand (6) in Z-Richtung zwischen Substrat und Laserlichtquelle (10) während der Bearbeitung abhängig von der Höhenlage der Ausgangs-Oberfläche (2a) oder der Höhenlage der Ziel-Oberfläche, nachgeführt wird.
**(Oberflächenfarbe)**

8. Verfahren nach einem der vorhergehenden Ansprüche,
**dadurch gekennzeichnet, dass**
die Bildwirkung erzielt wird durch Farbveränderung der mittels Laser (4) bearbeiteten Bereiche von der Ausgangsfarbe des insbesondere durchgefärbten Substrates in Richtung auf einen Ziel-Grauwert (F_{L}) der Ausgangsfarbe, wobei die durch die Laserbearbeitung bewirkte Farbdifferenz (+/- ΔF) um so größer ist, je größer die Energie (E) des Laserlichtes (4) ist.
**(Farbe und/oder Relief in Schichten)**

9. Verfahren nach einem der vorhergehenden Ansprüche,
**dadurch gekennzeichnet, dass**
die Farbdifferenz (+/- ΔF) unabhängig von der Abtragtiefe gesteuert wird indem bei einer gewünschten niedrigen Farbdifferenz (ΔF) bei gleichzeitig gewünschter großer Abtragtiefe (3) der Abtragschichtweise, insbesondere bei linienförmigem Abtrag in unterschiedlichen Linienrichtungen bei den einzelnen Schichten (8a,b,..), erfolgt.

10. Verfahren nach einem der vorhergehenden Ansprüche,
**dadurch gekennzeichnet, dass**
- bei der Reliefbildung Pulsrate und Vorschubgeschwindigkeit (V) so gewählt werden, dass der gegenseitige Abstand der Einschläge (9a,b,..) geringer ist als der Kraterdurchmesser (d) der Einschläge (9a,b,..), insbesondere geringer ist als der Durchmesser (d_{B})des Kraterbodens der Einschläge (9a,b,..), und/oder insbesondere
- die Steuerung für das Rastern oder die Relieferzeugung automatisch geschieht durch Abtasten eines Vorlagenbildes, auch eines farbigen Vorlagenbildes, nach Graustufen und insbesondere mit zunehmender Abtragtiefe (3) eine zunehmende Farbdifferenz (ΔF) gewählt wird zur Verstärkung der dreidimensionalen Wirkung, und/oder insbesondere
- das Bestrahlen mittels Laserlicht (4) nur von einer Seite (2a) des Substrates, und insbesondere der Materialabtrag über die Mittelebene (13) des Substrates hinaus erfolgt.

11. Verfahren nach einem der vorhergehenden Ansprüche,
**dadurch gekennzeichnet, dass**
- die Bestrahlung des Substrates mittels Laserlicht gleichzeitig oder nacheinander von den beiden gegenüberliegenden Seiten (2a,b) des Substrates her erfolgt und insbesondere der Materialabtrag von beiden Seiten nicht über eine zuvor festgelegte Mittelebene (13) des Substrates hinaus erfolgt, und/oder insbesondere
- als Vorlage zum Steuern der dreidimensionalen Bildwirkung eine dreidimensionale Vorlage dient, deren Höhenprofil in abgeschwächter, aber qualitativ im positiven beibehaltener oder ins negative invertierter Form in die Oberfläche des Substrates reliefartig übertragen wird, und/oder
- dimensionale Bildwirkung erzielt wird durch zusätzliche Anwendung des Bedruckens, insbesondere mittels Siebdruck insbesondere vor der Laserbearbeitung, und/oder insbesondere
- die dreidimensionale Bildwirkung erzielt wird durch zusätzliche Anwendung des Prägens, insbesondere Prägung (20) des Substrates in Gegenrichtung zur Bestrahlungsrichtung des Laserlichtes (4), insbesondere vor der Laserbearbeitung.
**(Ergebnis)**

12. Organisches, plattenförmiges Substrat, insbesondere Papier, mit einem dreidimensional wirkenden Bild an der Oberfläche des Substrates,
**dadurch gekennzeichnet, dass**
- das Substrat von der Oberfläche (2a) her teilweise abgetragen ist, und/oder insbesondere
- die Abtragtiefe (3) des Substrates gesteuert variabel ist und
- die Farbdifferenz (ΔF) zwischen Ausgangsfarbe des Substrates, insbesondere eines durchgefärbten Substrates und der Farbe des abgetragenen Bereiches unterschiedlich, insbesondere jedoch unabhängig von der Abtragtiefe, ist, und/oder insbesondere
- die Farbe der Oberfläche des Materialabtrages (14) bei sehr hellem, insbesondere weißem, Substrat dunkler in Richtung auf einen Ziel-Grauwert (F_{L}) ist und umgekehrt bei dunkleren Ausgangsfarben als den Ziel-Grauwert (F_{L}) heller als die Ausgangsfarbe ist.

13. Substrat nach einem der vorhergehenden Vorrichtungsansprüche,
**dadurch gekennzeichnet, dass**
- die dreidimensionale Bildwirkung mittels Rasterung erzielt ist, indem mit zunehmendem Grauwert der Vorlage der Durchmesser der Lasereinschläge vergrößert, die Tiefe der Lasereinschläge vergrößert und/oder der Abstand der Lasereinschläge verringert wird, und/oder insbesondere
- die dreidimensionale Bildwirkung mittels Reliefbildung erzielt ist, indem bei einem negativen, konkaven Relief mit zunehmendem Grauwert der Vorlage die Gesamt-Abtragtiefe (3) vergrößert wird und/oder - bei zusätzlicher Farbveränderung - die Farbdifferenz (δF) bei einer Ausgangsfarbe heller als der Ziel-Grauwert (F₂) vergrößert wird, und/oder insbesondere
- die dreidimensionale Bildwirkung mittels Aufrauung der Oberfläche (2a) erzielt ist, indem mit zunehmendem Grauwert der Vorlage die Aufrauung verstärkt wird, und/oder insbesondere
- die Dicke des Substrates zwischen 0,05 mm und 3 mm, insbesondere zwischen 0,10 mm und 1 mm, beträgt.
**(Anwendung)**

14. Verwendung eines plattenförmigen, insbesondere organischen und/oder brennbaren Substrates mit einer wenigstens teilweise abgetragenen Oberfläche (2a) des Substrates im Auflichtverfahren als Bildträger oder Schriftgut.

15. Verwendung eines plattenförmigen, insbesondere organischen und/oder brennbaren Substrates mit einer wenigstens teilweise abgetragenen Oberfläche (2a) des Substrates im Durchlichtverfahren, insbesondere als Lampenschirm oder Werbeträger, und/oder insbesondere Verwendung als Sicherheitsmerkmal, im Auflichtverfahren oder im Durchlichtverfahren, auf z. B. einem Ausweis oder einem Geldschein, wobei insbesondere von beiden Seiten des Substrates her die Oberfläche (2a) wenigstens teilweise abgetragen ist und die abgetragenen Bereiche der einander gegenüberliegenden Seiten des Substrates sich wenigstens teilweise überlappen und dadurch bei Auflicht oder Durchlicht unterschiedliche Bilder zu erkennen sind, insbesondere auch unterschiedliche Bilder bei gleicher Lichtart von den beiden unterschiedlichen Seiten des Substrates her.
